# EUROPEAN PATENT APPLICATION

(11) **EP 1 809 002 A2**
(43) Date of publication of application: **18.07.2007**
(21) Application number: 06255857.2
(22) Date of filing: 16.11.2006
(51) Int. Cl.: H04L 29/08

(54) **Method and system for monitoring of telecommunications activity**

(30) Priority: 16.11.2005 GB 0523374; 30.03.2006 GB 0606411
(71) Applicant: 10 ACT Limited, Guildford, Surrey GU3 2JR (GB)
(72) Inventor: Horwood, Jerry, Dye House Road Thursley, Surrey GU8 6QD (GB)
(74) Representative: Cozens, Paul Dennis

(57) **Abstract**

A method is provided for enabling monitoring of telecommunications activity associated with a particular first party, comprising the steps of: receiving a communication from said first party, the communication including contact information for said first party; in response, allocating a unique and trackable prospect identifier to said first party, the prospect identifier being associated with the contact information for said first party, wherein, subsequent use of the prospect identifier by a second party enables contact with said first party by said second party, and enables tracking and/or monitoring of said use by a third party together with the deployment of rules controlling the provision or re-assignment of that facility to make contact.

## Description

### Field of the invention

The present invention relates to a method and system for enabling monitoring of telecommunications activity, as well as to the deployment of rules to manage the routing of that activity.

### Introduction

Nowadays advertising is, of course, an essential and powerful commercial tool, and a variety of different advertising media have been developed. These media services include, for example, print advertising (campaign and classified advertisements), billboards and signage, Internet advertising (e.g. websites, portals, banners and pop-ups), direct mail and telesales. The intention of advertising is-of course to promote interest in the prospective customer base and to prompt desired customer activity, ideally to prompt a sale.

Frequently, an advertisement is accompanied by contact details by which the potential customer can make contact with the advertiser. This may be a physical address, but nowadays is more likely to be a telephone number (often a freephone or reverse billing number), a website URL provided by the advertiser, or an email address. The advertiser will therefore set up a process for attending to enquiries resulting from its advertising campaign, and it is advantageous that such a process is at least partially automated for reasons of cost, efficiency and monitoring.

By way of example, within the automotive industry, an OEM (i.e. a car manufacturer) generally takes responsibility for a national advertising campaign. However, customer enquiries resulting from that campaign need to be routed to appropriate vehicle dealerships for follow up. Such enquires are referred to as 'leads' which are typical for purchases of high value items such as cars, property, financial products and holidays. A unique telephone number or email address may be provided for a particular advertisement or a particular campaign, and a message received at that number or address can thus be routed to a suitable dealer, typically the nearest to the enquirer. Using existing tracking systems, it is therefore possible to monitor responses to the advertising campaign and, if appropriate, to adjust the campaign in accordance with this monitoring. For example, an advertiser is able to monitor visits to a website under their control, and this can provide valuable feedback regarding, for example, the customers who click on that particular link.

An example of telephone call-tracking technology is discussed in US Patent 6,470,079. The system described is configured to capture to a database information about inbound telephone calls, including the caller's name, address and telephone number, as well as the advertisement to which the caller is responding. This affords an opportunity for an advertiser to follow up on leads that might otherwise have been lost, as well as allowing comparison of the effectiveness of advertising efforts. A separate national freephone or local telephone number is provided to the advertiser, to be inserted into each advertisement or campaign to be tracked. Calls to these numbers are routed through the tracking system (at which point information about each inbound call is captured to the tracking database), and connecting with the advertiser's business telephone. The telephone number dialled by the customer is therefore used to provide a determination of which advertisement caught that caller's attention.

With solutions such as those discussed above, the advertiser has no way of tracking the activity on websites controlled by other parties (such as dealers), nor of automatically tracking other activity - such as telephone responses to advertisements - with which they are not directly involved, or those they have collected typically using centralised call centres, and then redistributed to the appropriate local agent or dealer for the all-important fast personal sales follow-up leading hopefully to a sale.

For example, there are no practical tools available to allow an OEM to automatically monitor whether, when, how, or how frequently a dealer to whom a lead has been passed actually follows up that lead, and thus to allow remedial or alternative measures to be taken. Traditionally OEMs conduct surveys, often sampled, some weeks or months after the initial contact to establish whether the enquiry had received a response.

It is generally recognised that dealers that build pre-sale relationships faster and have a well-defined CRM and sales process in place, supported by their OEMs, enjoy higher closing rates than others.

Hitherto, the competitive playing field for dealers consisted of, for example, two Ford dealerships across town from each other competing for business. Nowadays, the playing field is comprised of a broad spectrum of dealerships in a wide geographical area that offer a range of makes and models for customers (including Internet customers) to choose from.

Dealers must defend their territories and increase market share on this competitive playing field with quality leads, good customer service, powerful CRM tools, and a disciplined sales process. What helps dealers most is when this philosophy is supported by an OEM initiative and is part of the corporate culture.

The discrepancies in lead closing rates by vehicle brand substantiate this fact. When a lead provider - which may be a third party - is the same (the sales leads are essentially the same product: sourced, filtered, verified and delivered in the same way across all brands), one might assume that closing rates would be consistent. However, once leads are in the hands of appointed dealers or sales agents, lead follow-up, CRM, sales processes, and corporate cultures vary, resulting in different closing rates.

The present invention concerns customer relationship management (CRM) methods and systems, particularly for mapping and tracking customer enquiries and dealer/vendor/agent responses. The invention has application in allowing OEMs to monitor enquiry response activities, and to encourage desired behaviours of sales staff who typically may be employed and managed by independent businesses.

Certain CRM tools are already available for use by dealers, including systems developed and customised by and/or on behalf of OEMs. For example, Internet-based automated scheduling solutions have been developed for dealerships, affording improvement in dealers' internal operations, such as service appointment scheduling. The convenience for vehicle owners means less service business is lost to abandoned calls on hold or no-show appointments. The centralised provision of such systems by OEMs, often deployed over secure computer extranets, can enable the relevant dealer network to increase the share of owners who have purchased those vehicles becoming service customers of those dealers.

However, research has indicated that when it comes to following up on potential sales leads (originating from OEM's or from associated lead providers), dealers have a long way to go. If telephone calls are engaged or there is no response, the dealer may well simply not persevere.

The dealer may feel there are too many leads to handle, or that leads are too old to pursue, or that leads are of too low quality. Leads go cold very quickly in this market; customers can very simply go to another car manufacturer if an enquiry is not responded to within a short period of time. As there are no automated monitoring tools for OEMs or others to employ to monitor the activity of a remote and typically independent franchised dealership business, the overall process simply relies on training and trust. There have hitherto been no (or very limited) means for objective or systematic monitoring of dealer conduct in this respect, other than *ad hoc* measures, typically by making follow-up calls to sampled leads some time after initial contact to assess whether they had been previously followed-up by the dealer. This scenario differs from centralised CRM operations where all contact, inbound and outbound, can be controlled and monitored under one roof using Computer Telephony Integration (CTI) systems.

Broadly, the present invention aims to at least partly address the above-mentioned inconveniences where sales follow-up is required by enterprises who cannot use a traditional central CTI framework, and to provide an alternative cost effective CRM system and process which emulates that offered by centralised CTI. Furthermore, this invention seeks to enable the original collector of the lead, typically an OEM, to perform a range of automated process changes with respect to how that is processed, and by whom, depending on rules driven by information supplied by the system's monitoring processes.

### Summary of the invention

In accordance with one aspect of the invention, there is provided a method for enabling monitoring of telecommunications activity associated with a particular first party, comprising the steps of:
receiving a communication from said first party, the communication including contact information for said first party;
in response, allocating a unique and trackable prospect identifier to said first party, the prospect identifier being associated with the contact information for said first party;
wherein, subsequent use of the prospect identifier by a second party enables contact with said first party by said second party, and enables tracking and/or monitoring of said use by a third party.

Preferably, the method includes the deployment of rules controlling the provision or reassignment of the facility to make contact.

Preferably, the method includes the steps of receiving a communication from a second party; using a prospect identifier lookup table to identify one of a plurality of first parties for the communication based on the prospect identifier; and routing the communication to the identified first party.

Preferably, the method includes the step of monitoring, by said third party, said telecommunications activity by means of a rules and tracking system, and said rules and tracking system preferably undertakes one, some or all of the following tasks:
reporting; automated data entry; benchmarking; call recording; targeting for training; imposing standards; exclusion; and encouraging competition.

Preferably, the said rules and tracking system logs information relating to the communication received from said first party, which preferably includes the time of said first party-initiated communication.

Preferably, the method includes the step of penalising or rewarding a second party in accordance with the monitored telecommunications activity and rules stored in said rules and tracking system, said rules and tracking system preferably being an automated rules and tracking system and the penalising or rewarding step additionally being automated.

Preferably, the method includes the steps of measuring the time period or periods elapsed between the time of the communication and one or more uses of the prospect identifier by said second party, and invoking prescribed rules stored in said rules and tracking system in accordance with the measured time period or periods.

Preferably, the prescribed rules include the setting of telecommunication charge rates, or allocation of replacement phone numbers to set premium telecommunications charge rates, applicable for use of the prospect identifier by said second party to contact said first party in accordance with the measured time period or periods.

Preferably, the prescribed rules include the cancellation or suspension of the prospect identifier after expiry of a pre-defined time period following the logged time of the communication if no use has been made of the prospect identifier by said second party, and preferably, on expiry of said pre-defined time period, a new unique and trackable prospect identifier is allocated to said first party.

Preferably, the new prospect identifier is provided to a further party, such as a substitute party for said second party.

Preferably, the method includes the step of communicating said prospect identifier to said second party.

Preferably, a or said third party allocates and communicates said prospect identifier.

Preferably, the prospect identifier is communicated to a plurality of second parties, and the prospect identifier is blocked from further use after one of the said plurality of second parties has used said prospect identifier, preferably the second party who uses the prospect identifier not being blocked from further use.

Preferably, the prospect identifier is blocked from further use after a predetermined number of second parties has used the prospect identifier, preferably the second parties who have used the prospect identifier not being blocked from further use, preferably the pre-defined number of second parties being two, three, or more.

Preferably, the method includes the step of generating, by said rules and tracking system, one or more reports for said third party, based on the use by said second party of the prospect identifier.

Preferably, the method includes the step of allocating second party incentive rewards based on said report.

Preferably, the incentive rewards are calculated based on predetermined performance standards, preferably said performance standards being response time or another such factor monitored by said rules and tracking system.

Preferably, the method of any of the preceding claims wherein a or said third party automatically brings said second party into contact with said first party.

Preferably the third party monitors said use in real time, preferably on a display unit or computer screen.

Preferably, the second party sends a communication to said first party via a or said third party, such as a call centre, which routes the communication to said first party.

Preferably, the communication sent by said second party includes a unique identifier of said second party, and wherein preferably a further unique identifier is sent that identifies an individual member of said second party.

Preferably, the method includes the step of providing the unique and trackable prospect identifier to a selected second party, to enable use by the second party.

In a preferred form, the first party is a customer or prospective customer of a product or service.

In a preferred form, the second party is a vendor or supplier of the product or service, or a potential vendor or supplier of the product or service.

In a preferred form, the third party is a source or manufacturer of the product or service, or is a facilitator acting on behalf of a source or manufacturer of the product or service.

The telecommunications activity may be one or more instances of telephone contact by said second party with said first party. Alternatively, the telecommunications activity may be one or more instances of email contact by said second party with said first party. Other forms of telecommunications activity are embraced by the invention.

The communication from said first party may be a telephone enquiry or an email enquiry. The communication from said first party may be received by said third party.

The unique and trackable prospect identifier may be a unique telephone number which includes an exchange code for an exchange associated with or operated by said third party.

Such a telephone number can therefore be used to track telephone calls made by said second party to said first party. It should be noted that the telephone number does not need to be a conventional telephone number, as its purpose is for use by the exchange to map onto an associated telephone number, being the originally supplied telephone number of the first party which might itself be a trackable number. The unique and trackable prospect identifier can therefore be seen as a virtual or intermediary telephone number. It may contain more digits than a conventional telephone number (a concept referred to as 'overdial'), and indeed such additional digits may be needed to ensure that sufficient numbers are available for each particular first party to be allocated a unique prospect identifier. It should be noted that this invention does not necessitate the use of a unique and trackable prospect identifier that is different from the original contact telephone number and email address. In some circumstances, the original contact telephone number and email address may be provided to the dealer who can be routed to the prospect by dialling the original contact number once connected with the invention's systems. In this instance, the potential for the system to deploy a rule to prevent the dealer from performing further communication with the prospect is not available, but the remaining aspects of the system, including the monitoring aspects, are still utilised, together with the potential for other rule-based activity such as modifying the cost of each call.

The exchange may, for example, be a digital switching facility in combination with a digital interface. The unique and trackable prospect identifier may be a unique email address which includes a domain associated with or operated by said third party.

Such an email address can therefore be used to track emails sent by said second party to said first party. The email address can be generated and allocated by or on behalf of said third party to allow mapping onto an email address of said first party. The prospect identifier can therefore be seen as a virtual or intermediary email address.

The use of the term "unique" above is not to be taken to mean that a prospect identifier can never be re-used, simply that it is unique for the purposes of the particular monitoring envisaged. For example, when used to monitor telecommunications activity with regard to a particular advertising campaign, the unique and trackable prospect identifiers generated and allocated for customers or potential customers may be suspended or cancelled at the close of the campaign or after a pre-defined period, allowing those prospect identifiers to be re-used if required for subsequent advertising campaigns.

Preferably, the method includes the steps of:
receiving a communication from a second party
preferably, automatically recognising that party from their Calling Line Identifier (CLI)
using a prospect identifier lookup table to identify one of a plurality of first parties for the communication based on the prospect identifier; and
routing the communication to the identified first party.

Preferably, the method includes the step of:
monitoring, by said third party, said telecommunications activity by means of a rules
and tracking system.

Preferably, said rules and tracking system is an automated rules and tracking system.

The invention can therefore be employed to control the routing of communications (such as telephone calls) from second parties to identified first parties, in accordance with prescribed rules.

The method of this aspect of the invention may include the step of penalising or rewarding a second party in accordance with the monitored telecommunications activity and rules stored in said rules and tracking system.

Said rules and tracking system enables logging of information relating to the communication received from said first party, which may include the time of said first party-initiated communication.

In a preferred form the method includes the steps of measuring the time period or periods elapsed between the time of the communication and one or more uses of the prospect identifier by said second party, and invoking prescribed rules stored in said rules and tracking system in accordance with the measured time period or periods.

The prescribed rules may include the setting of telecommunication charge rates, or allocation of replacement phone numbers to set premium telecommunications charge rates, applicable for use of the prospect identifier by said second party to contact said first party in accordance with the measured time period or periods.

The prescribed rules may also or alternatively include the cancellation or suspension of the prospect identifier after expiry of a certain time period following the logged time of the communication if no use has been made of the prospect identifier by said second party. Preferably, on expiry of said certain time period, a new unique and trackable prospect identifier is allocated to said first party. Said new prospect identifier may be provided to a further party, such as a substitute party for said second party.

In this way, if a dealer, for example, fails to follow up on a sales lead within a predetermined time, that lead may be automatically passed to a competing dealer in accordance with the rules comprised in the rules and tracking system. These principles may of course also be applied to other analogous situations. For example the same lead can be allocated to a group of dealers. The first dealer to make contact will automatically prevent any other dealer from being connected.

The method may include the steps of allocating a second party identifier to said second party, and uniquely associating the second party identifier with the prospect identifier, wherein the prescribed rules permit only a communication identified as received from the said second party to be routed to said first party.

The prescribed rules may also or alternatively include the termination of said unique association after a predetermined time period has elapsed from the time of the first party-initiated communication, if no use has been made during this time period of the prospect identifier by said second party, and the association of the prospect identifier with an alternative second party identifier allocated to an alternative second party. In this way, a second party initiating a communication can be identified by the system, and in accordance with prescribed rules, this may be used to determine whether to route the communication to the first party and, if not, whether and how to provide the unique and trackable prospect identifier to the alternative second party identifier allocated to an alternative second party, and to route the communication to said alternative second party.

More particularly, the method of this aspect of the invention may include the steps of:
allocating a second party identifier to a particular second party;
on receipt of a communication from a second party, identifying that particular second party based on the second party identifier; and
invoking one or more rules stored in said rules and tracking system to decide whether and how to route the communication to the identified first party.

Said second party identifier may represent or be associated with calling information extracted from the communication received from the second party. The calling information may include one or more call line identifiers associated with the second party.

The method may include the step of generating, by said rules and tracking system, one or more reports for said third party, based on the use by said second party of the prospect identifier.

The prescribed rules may also or alternatively include one or more rules concerning the allocation of prospect ratings in accordance with the length of time of a telecommunications activity between said second party and said first party through use of the prospect identifier.

The prescribed rules may thus include a so called "15 second rule", where if the communication received from said second party is less than 15 seconds, say, in duration (or otherwise less than maybe 30, 20, or 10 seconds) it is assumed that a genuine response to the prospect's original call has not been provided. As an example, the first party's answerphone may have been reached, and this would not be regarded as a genuine response. This fact may then be included in one or more reports generated for said third party. As a further example, the call may have been successfully made, but the first party may not have been available to answer the communication.

The prescribed rules may also or alternatively include the provision to said second party, after a prescribed time period has elapsed from the time of the first party-initiated communication, of said contact information for the first party, to allow direct and unmonitored communication between the two parties.

The method of this aspect of the invention may be a CRM method suitably for use in the automotive industry by which a third party (such as an OEM or a lead source operating on behalf of an OEM) may - for example by recording the telephone conversation - monitor the follow up by dealers of customer leads provided by or on behalf of the third party.

The method of this aspect of the invention can provide benefits for all parties involved; the customer, the dealer and the OEM. The customer receives a more responsive service and enquiries are significantly less likely to be ignored. The dealer can readily evaluate which advertising campaigns are effective, and can readily benchmark against other dealers. Importantly, the dealer is able to monitor the activity of their own salespersons and instigate appropriate performance improvement measures. For the OEM, the invention provides a means of comparing dealerships, and to modify the CRM model to put the emphasis on rapid response to enquiries. In addition, there is a growing tendency to respond by email and for the salesperson to assume that this is sufficient follow-up. However, it is well recognised that phone conversations are far more effective in leading to successful sales. Consequently it is important to focus on ensuring that the maximum amount of telephone contact is achieved. The effect of utilising this approach can be readily and quantifiably monitored, ultimately leading to winning customers and gaining incremental sales. This invention can eradicate the need for manual checking by OEMs and other sellers of goods or services as to whether, when, and by whom an enquiry has had a response.

Customer enquiries may be received by OEMs via Internet websites, direct mail (email or post), or telephone response to advertisements. Such enquiries are then forwarded (automatically or otherwise) to an appropriate dealer for follow up. Without a means of monitoring subsequent dealer activity, it is not possible to evaluate the performance of dealerships in pursuing such leads. Without an appropriate means of encouraging follow-up, there is a risk that a large number of such leads will simply lapse, resulting in customers switching brands in response to efforts by competing OEMs.

In accordance with a further aspect of the invention, there is provided a system for enabling monitoring of telecommunications activity associated with a particular first party, the system comprising:
a receiving unit for receiving a communication from said first party, the communication including contact information for said first party;
a prospect identifier allocation unit for allocating, in response to receipt of a communication by said receiving unit, a unique and trackable prospect identifier to said first party, the prospect identifier associated with the contact information for said first party;
a tracking unit for tracking use of the prospect identifier by a second party to contact said first party.

Preferably, the system includes a memory unit for associating the prospect identifier with said contact information for said first party.

Preferably, the system includes a telecommunications exchange for routing telecommunications activity from said second party to said first party, said telecommunications exchange operably coupled with said tracking unit.

The memory unit may comprise a prospect identifier lookup table to enable said routing.

The telecommunications exchange may, for example, be a telephone exchange, such as a digital switching facility or a local carrier exchange, or an email router.

The system may include a rules and tracking system to allow monitoring by a third party of said telecommunications activity, said rules and tracking system including said tracking unit.

Preferably, said rules and tracking system is an automated rules and tracking system.

The telecommunications exchange is configured to route telecommunications activity from said second party to said first party in accordance with rules stored in said rules and tracking system.

In accordance with a further aspect of the invention, there is provided a system having means for allocating a plurality of unique and trackable prospect identifiers to a plurality of first parties, in response to communications received from said plurality of first parties, each of which communications includes contact information for the respective first party, and means for storing and retrieving a correspondence of the unique and trackable prospect identifiers to the contact information.

Preferably, the system includes or is associated with means for monitoring use of the prospect identifiers by one or more second parties to contact respective first parties.

In accordance with a further aspect of the invention, there is provided a CRM method for use in respect of a promotion or advertisement provided to recipients along with advertiser contact information for recipient enquiries, the method including the step of, in response to a communication from a recipient by way of said advertiser contact information, allocating an individual prospect identifier code to said recipient, said individual contact identifier code enabling (i) tracking of its use and (ii) contact with said recipient.

Said communication from the recipient may include recipient contact information. The individual prospect identifier code is associated with that recipient contact information in order to enable contact with the recipient. In this way, a store of contact information can be established, mapped to a store of respective individual prospect identifier codes.

Said individual prospect identifier code is subject to automated control, preferably under rules established by or on behalf of the advertiser. The rules may include one or more rules set to operate in accordance with the age of the individual prospect identifier code.

The method of the invention may be for use in the automotive industry. The advertiser may be a vehicle manufacturer, importer or (e.g. head) dealership, and each recipient may be a prospective customer. The individual prospect identifier code may be provided to an automotive dealer, so enabling contact by the dealer with a prospective customer, and tracking of that contact.

In accordance with a further aspect of the invention, there is provided an electronic CRM management tool for use in respect of a promotion or advertisement provided to recipients along with advertiser contact information for recipient enquiries, the system having means for, in response to a communication from a recipient by way of said advertiser contact information, allocating an individual prospect identifier code to said recipient, said individual contact identifier code enabling (i) tracking of its use and (ii) contact with said recipient. Thereby, individual prospects can be monitored by relating data associated with said prospects with said prospect identifier.

In accordance with a further aspect of the invention, there is provided a method for enabling monitoring of telecommunications activity associated with a particular first party, comprising the steps of:
receiving a communication from said first party, the communication including contact information for said first party;
allocating a unique and trackable contact identifier to said first party, the contact identifier being associated with the contact information for said first party;
associating the unique and trackable contact identifier with a selected second party;
storing said unique and trackable contact identifier together with said contact information in a contact identifier lookup table;
providing the unique and trackable contact identifier to a selected second party;
receiving a communication from a second party using the contact identifier to attempt to contact said first party;
using a contact identifier lookup table to identify one of a plurality of first parties for the communication based on the contact identifier;
using stored rules to selectively route the communication to the identified first party.

In accordance with a further aspect of the invention, there is provided a system for enabling monitoring of telecommunications activity associated with a particular first party, comprising:
first receiving means for receiving a communication from said first party, the communication including contact information for said first party;
allocation means for allocating a unique and trackable contact identifier to said first party, the contact identifier being associated with the contact information for said first party;
association means for associating the unique and trackable contact identifier with a selected second party;
storage means for storing said unique and trackable contact identifier, together with said contact information, in a contact identifier lookup table;
providing means for providing the unique and trackable contact identifier to a selected second party;
second receiving means for receiving a communication from a second party using the contact identifier to attempt to contact said first party;
routing means for selectively routing the communication received from the second party to the identified first party based on identification of the first party from the contact identifier lookup table.

The present invention, then, revolves around the concept of tracking individual customers (or prospective customers), rather than simply monitoring based on the product or service in question. Each such prospect is allocated a prospect identifier, such as a telephone number or email address, although shorter identifiers, such as identifiers that are less than say 10, 8, 6 or preferably 4 characters in length, are often preferable. This serves to uniquely identify the prospect likely to make the purchase. In one embodiment, the identifier is potentially - but not necessarily - in the same form (e.g. telephone number or email address) as the means by which each prospect was originally identified. By appropriate selection of the identifier and the process by which it is handled, the prospect identifier is controllable and trackable by the controlling party, and does not enable communication with the prospect other than via (or in a manner trackable by) the controlling party. Preferably, the prospect identifier comprises or is associated with auxiliary data that relates to a probability of purchase by that prospect. The allocation of the prospect identifier may be made by the controlling party, or may be made selectively by another party, such as by the prospect themselves, or by a party (such as a dealer or vendor) using the prospect identifier to contact the prospective customer.

The invention also provides use rule-based telecom switches linked to web servers.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

### Brief description of the invention

A non-limiting example of the invention will now be described, with reference to the attached figures, in which:
Figure 1 schematically illustrates the method and system of the invention;
Figure 2 schematically illustrates the operation of a form of the invention;
Figure 3 schematically illustrates the operation of a further form of the invention;
Figure 4 schematically illustrates the operation an alternative embodiment of the invention partially utilising conventional infrastructure;
Figure 5a schematically illustrates a process of receiving a prospect enquiry;
Figure 5b schematically illustrates a process of dealers receiving leads;
Figure 5c schematically illustrates a process of OEMs defining rules of the system;
Figure 6 is a flow diagram of a process by which a dealer receives and acts upon a lead including the process by which each sales person can be identified by the system, and a process where the system can automatically allocate leads;
Figure 7 is an example of an OEM 'dashboard' monitoring system;
Figure 8 is an example of a dealership 'dashboard' monitoring system; and
Figure 9 is a further example of a dealership 'dashboard' monitoring system.

### Detailed description of the invention

An example of a system for use in the automotive industry will be discussed in detail below, with reference to the attached figures. However, the skilled reader will appreciate the application of the systems and method of the invention to an innumerable variety of different industries. The example discussed relates to the tracking of the follow up of sales leads in response to advertising activity. However, the skilled reader will appreciate that the system and method of the invention has application to a wide variety of situations in which it is required to monitor telecommunications activity associated with a particular party or parties.

The system and method described relates to the processing of in-bound communications made in response to an advertisement or a solicitation, in this case an automobile advertisement.

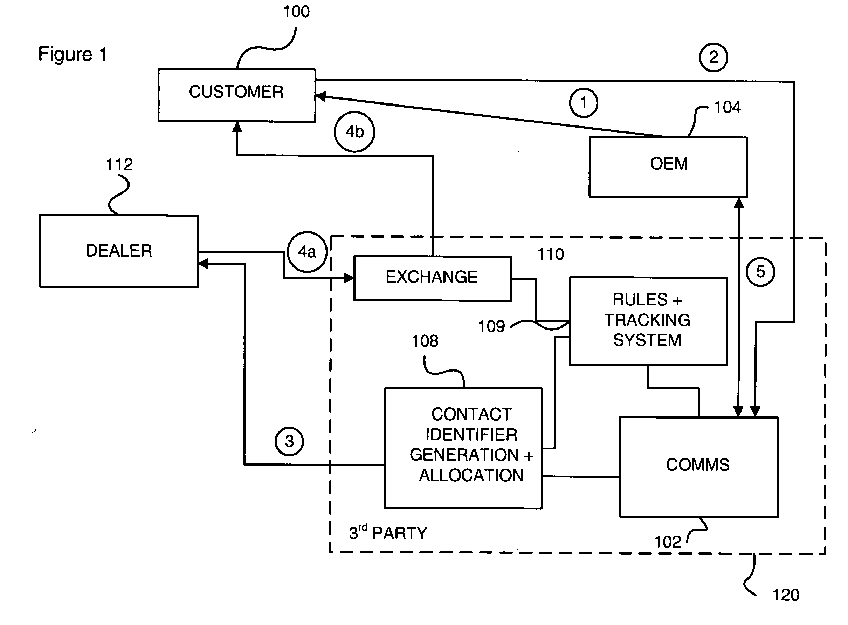

In Figure 1, an OEM 104 (such as an auto manufacturer) provides information to a customer 100 at step 1. This may be by way of an advertisement (radio, TV, printed publication, Internet, email, direct mail, advertising billboard, etc) such as part of an advertising campaign, or may simply be information provided by way of the OEM's general relationship with the customer base.

The information provided at step 1 includes contact information (address, telephone number, email address, TXT/SMS number) by which the customer is invited to respond for further information, e.g. about a particular product or service.

The customer responds (step 2) by appropriate channels, this communication including contact information for the customer. A telephone call, email or TXT/SMS message generally includes such information automatically, otherwise the customer may actively provide such information, e.g. by completing a 'contact field' in a real or web-based form to be submitted.

The customer response (step 2) is routed directly or indirectly to a third party (referenced at 120), as shown in Figure 1, in which a communications unit 102 is shown for receiving the response communication. It should be noted that the third party 120 may be the OEM 104 itself, or may be a third party facilitator operating on behalf of the OEM and in communication with the OEM (as shown at step 5).

The customer response initiates a prospect identifier generation/allocation unit 108 to provide a unique and trackable prospect identifier (also referred to herein as a 'tracking' number) which uniquely identifies the customer 100 (and preferably the particular customer response). This prospect identifier may be a telephone number or an email address, depending on the type of contact information provided by the customer in the customer response. Alternatively, the prospect identifier may provide a conversion from one mode of communication to another, e.g. the contact identifier for a customer response telephone call may be an SMS/TXT number, or a fax number, if so desired by the third party. The prospect identifier is logged in a rules and tracking system 109, which stores a mapping of the prospect identifier to the 'real' contact information for the customer, and logs the initiation time (the time the customer response is received, or alternatively the time the prospect identifier is allocated, logged or forwarded).

The use of the term "unique" used herein is not to be taken to mean that a prospect identifier can never be re-used, simply that it is unique for the purposes of the particular monitoring envisaged. In terms of the function of the prospect identifier, it serves to uniquely identify the customer at a particular time. For example, when used to monitor telecommunications activity with regard to a particular advertising campaign, the unique and trackable prospect identifiers generated and allocated for customers or potential customers may be suspended or cancelled at the close of the campaign, allowing those prospect identifiers to be re-used if required for subsequent advertising campaigns.

The unique and trackable prospect identifier is then passed on to an appropriate automotive dealer 112 (step 3), which may for example be a dealer in the vicinity of the customer. In order to make full use of the rule management aspects of the system, the dealer 112 in this instance is not therefore provided with the actual telephone number of - or other direct means of contact with - the customer. Use of the prospect identifier by the dealer to contact the customer is then routed on the public telephone network via an exchange 110 controlled by or on behalf of or associated with the third party (steps 4a;4b). In the case of telephony, this exchange 110 may be a central switch (of any appropriate type, such as Automatic Call Distributor (ACD), Private Branch Exchange (PBX), or public-switched telephone network (PSTN)). In the case of email communication, this exchange 110 may comprise an email router.

The rules and tracking system 109 monitors and records calling information (passed on by way of the exchange) related to calls made using prospect identifiers. The calling information may include any pertinent and available information, which includes the number of the party placing the call, and the time of the call, whether the call was connected, the duration of the call. This can be passed, if required, to a web server on which the information may be accessible over the Internet to an authorised party, such as the OEM 104.

This arrangement enables the third party (operating by or on behalf of the OEM 104) to monitor the follow up by the dealer 112 of sales leads provided to it, and use the rules and tracking system 109 to record and report on that follow up, and to apply rules which have been prescribed by the third party. Many different types of reports may be generated by use of the invention, and those skilled in the art will appreciate the extent of such potential reporting, the further analysis and processing that can be carried out on the information, and the use to which that information can be put.

This approach therefore allows the OEM to conduct detailed analysis of (i) dealer behaviour in response to sales leads, and (ii) responses to advertising campaigns, and to provide this information to dealerships as appropriate. It also allows (through invocation of the prescribed rules) the OEM to instigate measures to drive desired dealer behaviour in responding to sales leads (through penalising slow and inefficient behaviour and/or rewarding prompt and effective behaviour). In particular, it allows the OEM to put the emphasis on rapid responses to customer enquiries, based on the logging of the prospect identifier.

For example, the dealer may be allocated a different charge rate, or telephone number incurring a premium charge rate, for a call to the customer, depending on the time elapsed since the logging of the prospect identifier, the rate increasing as the delay increases, and this encouraging rapid follow up. Other incentives (rewards or penalties) may readily be built into the rules and tracking system, such as an incentive for an increased number of follow up calls to a particular customer. If a dealer fails to contact the customer (i.e. fails to make use of the prospect identifier) within a predetermined time from the logging of that prospect identifier (e.g. one day), the prospect identifier may be automatically cancelled or suspended, and possibly a new prospect identifier allocated to that particular customer enquiry, and that new prospect identifier passed on to a competing appropriate dealer. This 'use it or lose it' approach provides a very powerful incentive for dealers to follow up leads promptly. Which rules are invoked may depend on characteristics of the original customer response, such as the time or duration of that communication, which may be seen as providing an indication of the probability of success of the particular customer prospect.

In a further example, the prospect identifier is provided to a group of dealers. The prospect identifier remains active for all those dealers until the first dealer has successfully contacted the prospect and followed up the lead. This 'lock-out' approach provides a further competitive incentive for dealers to follow up leads promptly.

When the prospect identifier is a telephone number, this can be seen as a 'virtual' telephone number, as it does not of itself provide contact information about the customer, but merely needs to specify the third party exchange and a number that can be mapped to the 'real' customer contact information by the third party rules and tracking system. The prospect identifier number may therefore contain more digits than a conventional telephone number, and indeed such additional digits may be needed to ensure that each customer is allocated a unique prospect identifier.

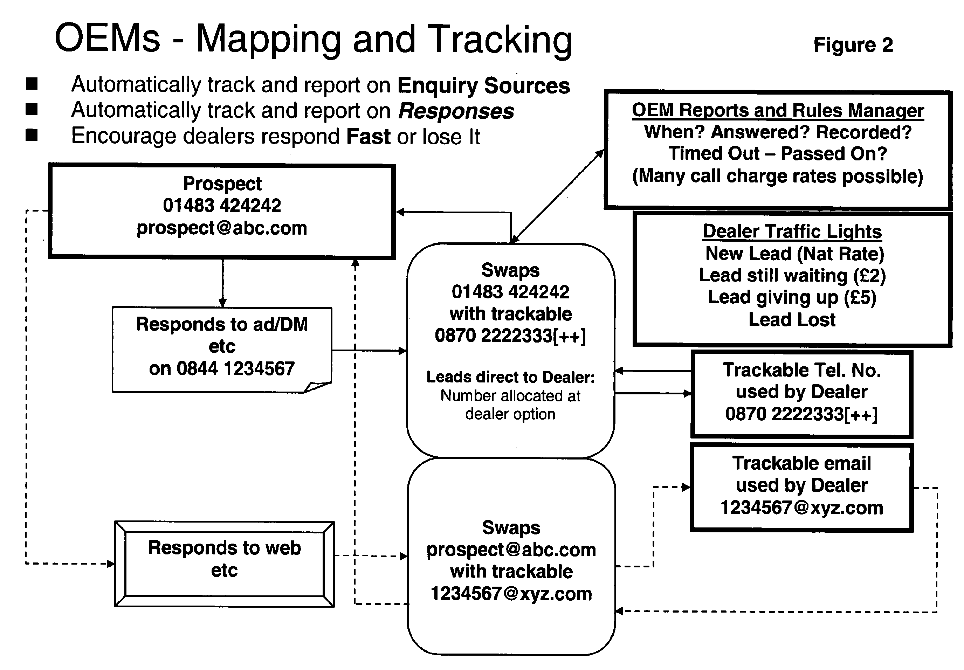

In the examples of Figure 2, the customer's number is 01483-424242, and the customer responds to a particular advertisement on the advertised call number 0844-12345678. The third party allocates the unique and trackable number 0870-222 333 (++) to this particular customer enquiry, and it is this number that is passed on to the dealer. 0870 is the exchange code representing the third party exchange, 222 333 may represent the particular advertising campaign, for example, and (++) signifies the additional digits (a concept referred to herein as 'overdial') representing the particular customer enquiry.

There are situations in which 'overdial' digits may not be available, as such a facility relies on the dealer's telephone service provider's ability to pass on the additional digits at the end of the network routing string. In such situations, activity needs to be limited to exploiting traditional telephone numbers, such as the conventional 11 digit UK national number (e.g. 0844 11234567), thus limiting the number of tracking numbers available to be allocated to customers. It is thus necessary to efficiently and effectively be able to re-use tracking numbers, and to this end the following methodology may be adopted.

Each tracking number allocated to a customer is only mapped to that customer's telephone number for a defined period, in accordance with a prescribed rule in the rules and tracking system.

When a dealer calls an allocated tracking number, the number that the dealer is using to call that number is identified by the system, referred to herein as the dealer's Calling Line Identifier (CLI). In accordance with a prescribed rule in the rules and tracking system, the dealer's CLI determines (based on the time elapsed since the initiation time) whether to route the call to the customer, or to play back a recorded message to the dealer, such as "This enquiry is now xx days old. You are no longer authorised to make this call. Please press # for assistance."

If the allocated time has elapsed and the dealer is 'locked out' of using this tracking number, the system allocates a second dealer's CLI to the tracking number, and the new dealer is informed of the lead and the means of contact.

In this way, at any time a customer's tracking number is allocated to the CLI (or CLIs of) only one dealer, thus avoiding the need to allocate a new tracking number if the dealer allocated that particular lead changes. If the dealer not currently allocated to that number calls that tracking number, then the system is configured to prevent routing to the mapped number, playing instead an appropriate recorded message, such as "Sorry. You are not authorised to use this tracking number. Please check the number and retry. For assistance, please press #." This prevents the original dealer from contacting the customer, and prevents accidental use of a tracking number.

A particular dealer may be associated with a number of CLIs, all of which may be concurrently allocated to a particular tracking number. This allows for a dealer having multiple lines, or calling from an alternative number such as a mobile number.

It is not the intention generally to prevent a dealer who has been locked out from ever establishing direct contact with a customer on an ongoing basis, rather to lock out that dealer only while that particular lead is still hot. In addition, there may be a practical necessity to re-use tracking numbers after a suitable period of time. With this in mind, the rules and tracking system may be configured to provide (to the dealer who still has an authorised CLI for the tracking number, or to all dealers who have been allocated to that tracking number) the customer's 'real' contact details and/or an automatic routing to the customer's number after a prescribed time has elapsed, e.g. by playing an appropriate recorded message, such as "Please note that this customer's direct dial number is xxxx xxxxxxx. The number you have dialled will cease to route to this number in YY days. Please hold the line to be connected."

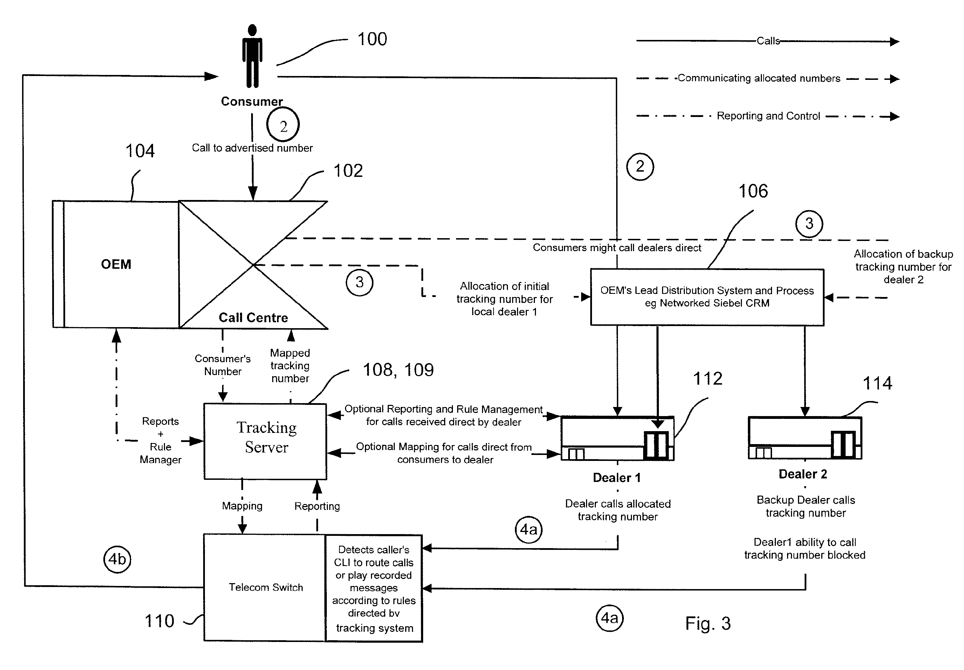

Figure 3 illustrates the system of the invention with the incorporation of the feature discussed above. As set out in the legend accompanying this illustration, the different types of connection lines illustrating the communications between the parties indicate respectively whether the communication is a telephone call, a notification of an allocated tracking number, or a reporting/control message. In this figure, the same references as employed in Figure 1 are used to denote the same components. In Figure 3, an OEM lead distribution system, such as a networked Siebel CRM system (which may in fact be incorporated into or directly associated with the tracking server 108, 109) is used to allocate the tracking numbers to the dealers 112, 114.

As the figure shows, for a particular prospective customer 100 the tracking server (108, 109) allocates a tracking number, which is allocated to and uniquely associated with Dealer 1 (reference 112). This lead is then provided to Dealer 1, to enable monitoring and routing (via exchange 110) of calls made to the tracking number. Only calls originating from Dealer 1 (and identified as such by means of Dealer 1's CLI stored in the system) are routed to the customer 100. After a set period of time has elapsed and no call has been detected from Dealer 1, the tracking number is allocated to and uniquely associated with Dealer 2 (reference 114). Henceforth, only calls originating from Dealer 2 (and identified as such by means of Dealer 1's CLI stored in the system) are routed to the customer 100, and Dealer 1's attempted use of that tracking number to contact the customer will be met with a recorded message, as discussed above.

As Figure 3 illustrates, the system may additionally include means by which calls received by dealers directly from customers can be diverted (e.g. selectively by dealers) into the same tracking process flow.

An analogous coding approach can be taken for allocating email addresses, for example in response to customer web enquiries. In the example illustrated, the third party allocates the unique and trackable address 1234567@xyz.com to this particular customer enquiry, and it is this address that is passed on to the dealer. @xyz.com represents the third party domain which enables monitoring of the use of this email address and re-routing to the original customer address. 1234567 is a unique string representing the particular customer enquiry.

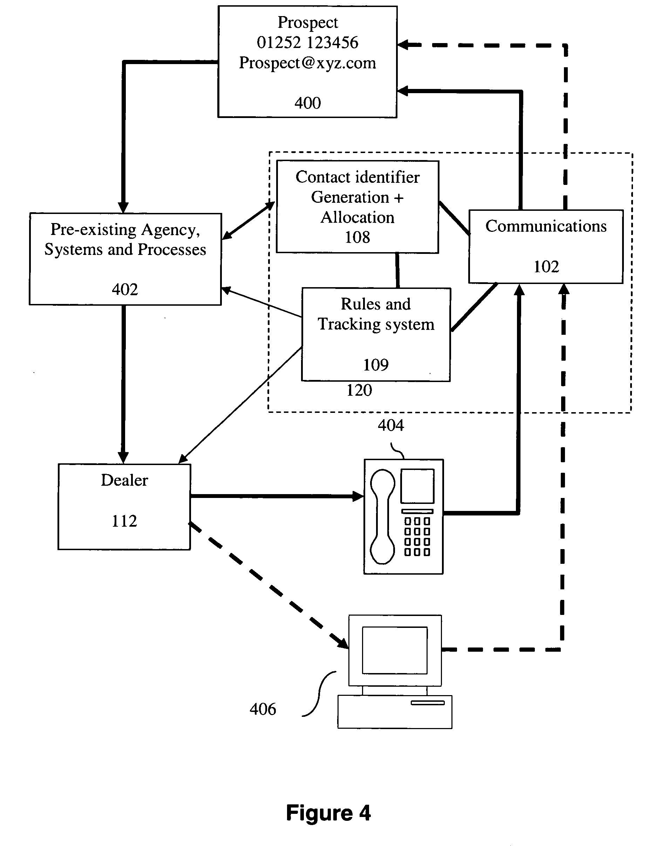

An alternative embodiment of the invention is illustrated in Figure 4, whereby the dealers are provided with a single contact number, and email address, of a third party 120. This enables the dealers to contact prospects quickly , cost effectively (possibly using low cost routing) and efficiently, for example, through the use of a 'speed-dial' button on the dealer's telephone programmed to call the third party number. Once connected through the third party system, all aspects of the call can be monitored.

In Figure 4, the same references as employed in Figure 1 are used to denote the same components. As is shown in Figure 4, when the prospect 400 contacts the pre-existing OEM prospect handling agency 402, he/she provides his/her contact details in the same way as is done conventionally. At this stage the agency 402 passes the details to the third party 120 who then provides a contact identifier associated with the prospect 400 for use by the dealer 112. The agency may also pass the prospect's contact details directly to the appropriate dealer(s) 112, or alternatively these contact details may be passed by the third party. The dealer then uses the third party contact number/email address (depending on the prospect's preferred means of contact) to contact the prospect 400 via the third party, using either a telephone 404, or a computer capable of sending email 406.

Once communications are established between the dealer, 112, and the third party, 120, the dealer inputs the contact identifier (which may be the prospect's original 'actual' telephone number) via the telephone keypad. The contact identifier is associated with the prospect's contact details and is used by the third party to route the dealer's phone call/email to the prospect.

It is not always desirable for the contact details of the prospect to be disguised from the dealer. In this case, which will lead to the broadest application of the rules and tracking system, the third party essentially only acts to forward the dealer to the prospect and enable monitoring of the communication although other, less penalising rules than re-assigning a lead may still be applied.. Thus, the contact identifier may actually be the prospect's telephone number or email address. In this case, when contacting the prospect by email the dealer would BCC (blind carbon copy) the email to the third party for monitoring purposes, (This may be the only way by which contact is made by the third party; hence, the only rule applied may be to verify by way of a look-up table that the telephone number or email address used by the dealer is indeed a valid prospect's telephone number or email address.)

As described above the third party may then use the rules and tracking system 109 to monitor and control the communications for the OEM. The examples of the rules system described above may also be employed in this alternative embodiment.

In addition the rules and tracking system 109 is capable of gathering further information from the dealer once the communication has ceased between the dealer and the prospect. For example, once the conversation has ended and the prospect has hung-up, the dealer may stay connected to the third party to input other information, such as the outcome of the call or the specifics of a future call or meeting. This could potentially be in the form of a voice message left, or input through the keypad of the telephone of specific pre-defined codes, indicating a successful call, or that an appointment has been made. This enables the OEM, via the agency 402, to monitor and control the communications to a greater level of detail.

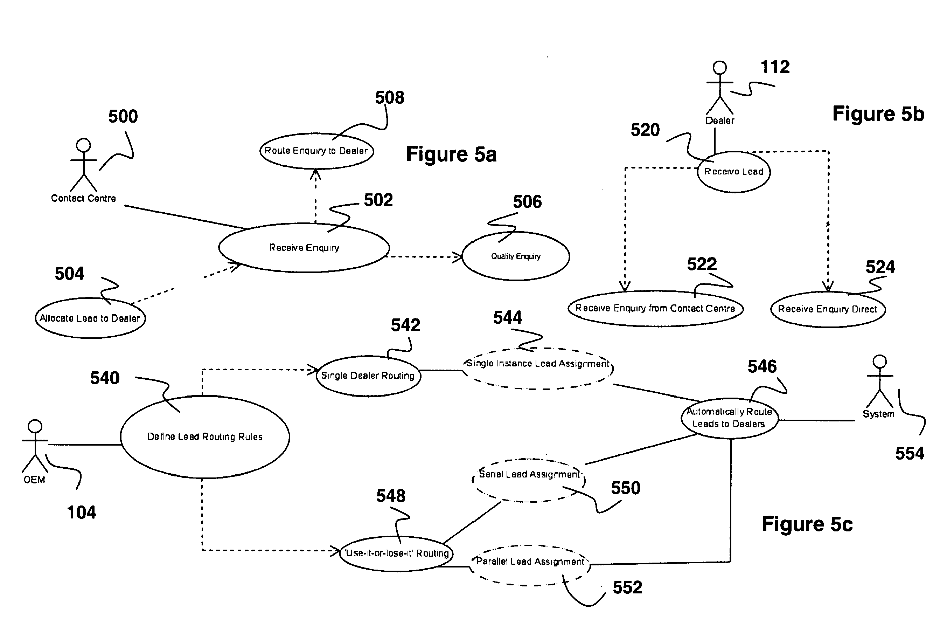

Figures 5 a, b, and c show general schematic representations of the systems involved in:
obtaining the prospect contact details; routing the details to the appropriate dealer; and
defining the rules associated with the leads. Figure 5a shows the contact centre 500 (previously described as the OEM prospect handling agency). The contact centre 500 receives an enquiry (step 502) and then allocates the enquiry 504 to a dealer. At this stage an indication of the quality of the enquiry, 506, may also be provided and routed, with the enquiry, to the dealer. The perceived quality of the enquiry will allow the dealers to prioritise the responses to prospects, although, it should also be noted that the weaker a lead, the more effort it requires.

Figure 5b shows the two methods in which dealers will receive leads 520. Dealers will receive leads either from the contact centre 522, or directly from a prospect, 524. Thus the system can also be used to monitor a dealer's responses to his own leads.

Figure 5c shows the system of defining lead routing rules by the OEM, 104. The OEM defines the lead routing rules, 540, for either the single dealer routing option (step 542), or for the multiple dealer routing option, 548. The OEM defines rules, such as the time scales to be used in increasing the cost of the call from the dealer to the prospect, in the single dealer routing case, which are then used when only one dealer is to be allocated the prospect identifier. The system, 554, can then use the rules to automatically route leads to dealers based on the rules, which may include rules such as 're-assign the lead to the next closest dealer to the prospect', or 'give the lead to the five closest dealers to the prospect and the first to make a call locks out the others'. In the case where the OEM defines rules for multiple dealers, as in 'use-it-or-lose-it, or 'lock-out' both as described above, the OEM may also decide whether to assign the prospect identifier serially to dealers (step 550), or in parallel (step 552), 'use-it-or-lose-it' and 'lock-out' rules respectively. Again the system can then use the rules to automatically route leads to dealers (step 546).

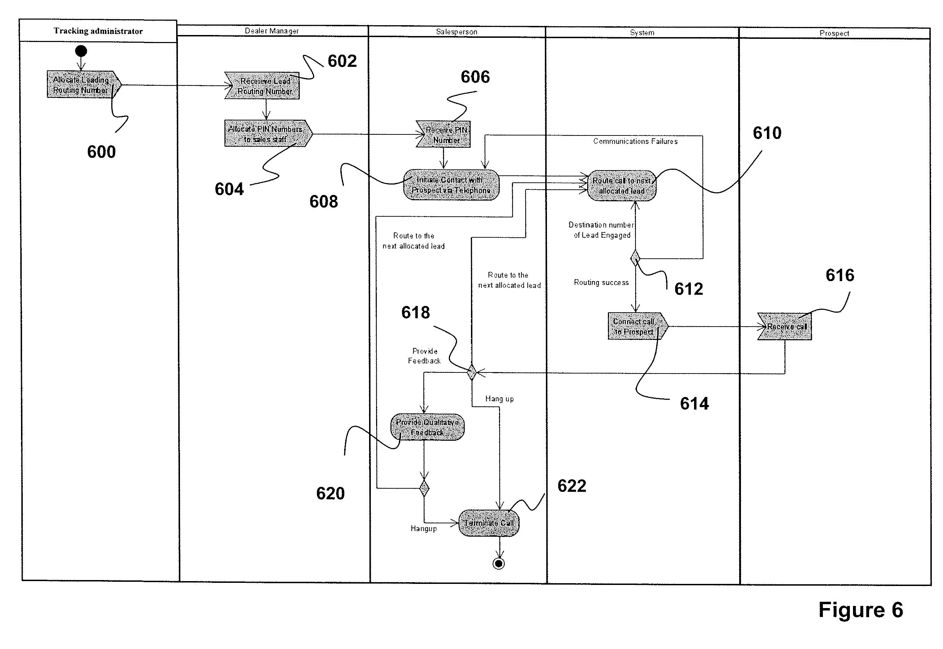

Figure 6 shows a flow diagram of a process involved in allocating the leads and contacting the prospect. The tracking administrator allocates each dealer a lead routing number; this is a unique number each dealership dials in order to be connected with the third party hosting the call routing system. The dealer manager is then provided with their unique lead routing number (step 602) and is provided with a facility to allocate PINs (personal identification numbers), 604, to all its' sales staff within the dealership. Typically these PINs will be digit-numbers. The sales staff receive their PINs, 606, and can then initiate contact with the prospect, 608, by calling the lead routing number for their dealership (typically preprogrammed into a quick dial button on the phones), inputting their PIN to identify themselves to the system, and then dialling the prospect identifier, the prospect identifier may either be the prospect's 'actual' phone number, or the prospect's Unique Identifier previously allocated to the dealership by the OEM or their CRM agency. The sales staff contact the third party 120, and can be routed to the next allocated lead, 610, on completion of each call. This process is automatically carried out by the third party and will be based on the rules set by the OEM. A system 612 is provided to handle communication failures and engaged numbers of the destination lead/prospect. If the connection is successful, 614, the sales staff and the prospect are then in communication. Once the conversation has finished the prospect hangs-up and the sales staff may be provided with a number of options, 618, including providing recorded or coded feedback about the call, 620. The list below provides an example of the use of coded feedback (the numbers represent the numbers on a telephone keypad):
- [1]='Wrong Number'
- [2] = 'Prospect not interested'
- [3] = `Ongoing'
- [4] = 'Appointment made'

The sales staff can then request to be connected to the next lead and the process starts again at 610, or hang-up and terminate the call, 622. In this way it is possible for the sales person to be monitored individually, and for the dealership to be monitored as a whole.

The dealer performance may be monitored using the rules and tracking system. The system is capable of calculating dealer incentive rewards, for example when the dealer achieves certain performance standards. Examples of the calculations are when the dealer has a high response rate to leads, or if the dealer makes a pre-defined number of further appointments with prospects.

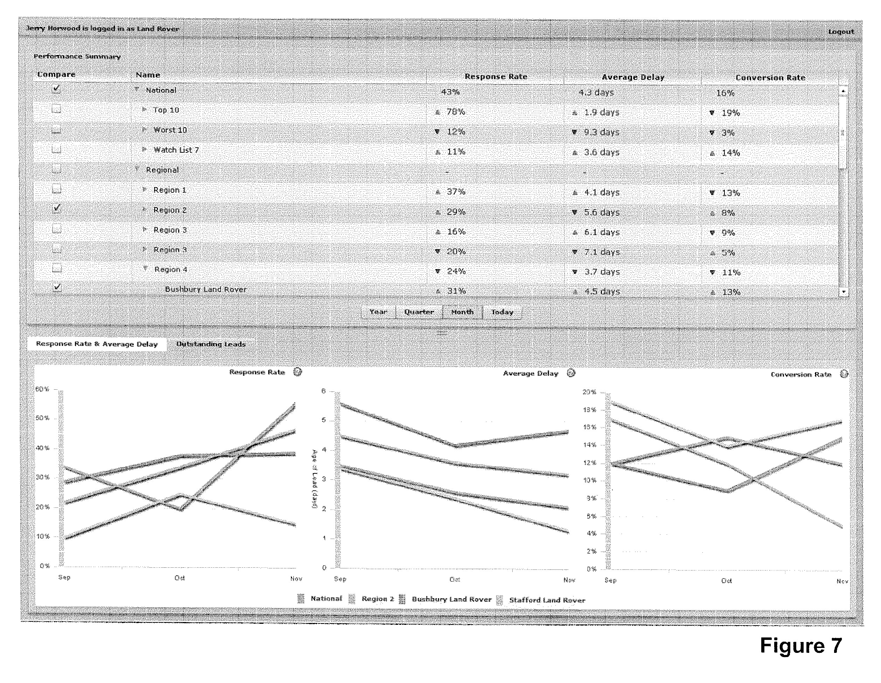

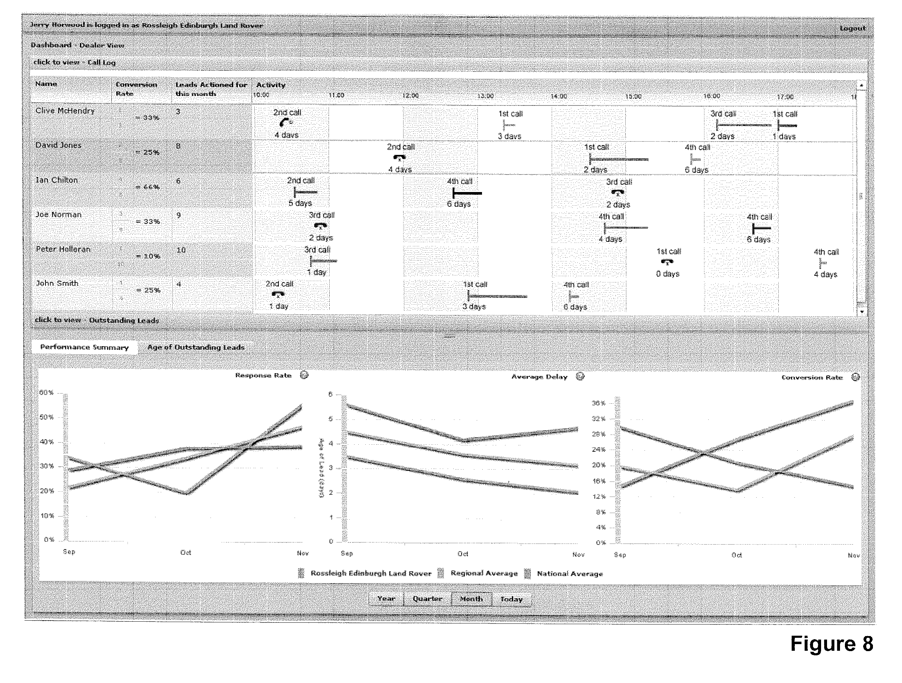

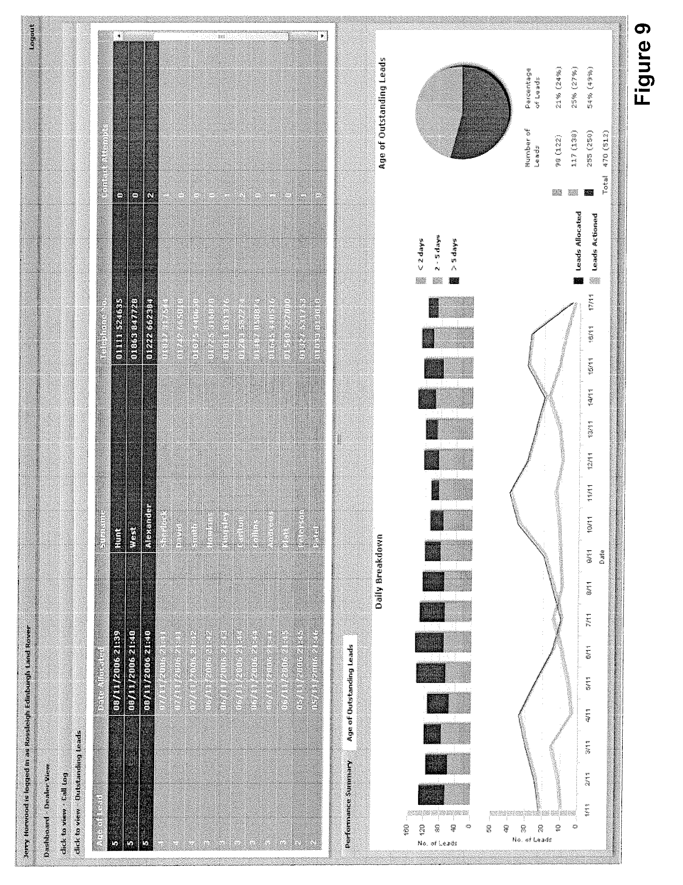

The invention also provides a method for the OEM and dealerships to monitor the progress of responding to leads; an example of this 'dashboard' can be seen in Figure 7. For the OEM the invention provides a real-time 'dashboard' providing on a display unit information such as the outstanding lead volumes and their age (e.g. number of leads that have not been responded to), ranks of regions and dealers by efficiency and effectiveness, current dealers who are making a telephone call, and statistics relating to dealership performance, such as efficiency and effectiveness. The 'dashboard' may also be used to listen in on telephone calls, including mystery shoppers' calls. The 'dashboard' provides a system to show the OEM visually the progress of the dealers, such as a real-time chart of the calls being made colour coded for their outcome. A similar 'dashboard' is provided for the dealer to monitor individual sales staff performance, relative to other members of the same dealership and the rest of the OEM network, and summarises leads still outstanding including the number of attempts made to contact the lead and can monitor the salesman's performance; examples of this may be seen in Figures 8 and 9.

The rules and tracking system provided by the present invention allows for a choice of functionality for a customised process using a cascading scale from supportive to aggressive monitoring and control, respectively, by the OEM depending on how much control the OEM wishes to exert over their leads once they have been allocated to their dealers. The following list outlines the scale from supportive to aggressive measures starting with the supportive:
- Reporting and Cost Saving - Provides proof of follow up of the leads both by the individual sales staff and the dealer and offers the dealer savings in telephone charges by using the system, especially to mobile phones.
- Automated data entry - The result of the call is automatically fed to the contact management system, for example that the prospect did not answer, was engaged or was not there.
- Benchmarking - Allows for comparisons between sales staff within a dealership and between dealerships themselves, and provides a method of analysing trends.
- Call recording - Aids in keeping records of calls made to leads, can be used in audits, and allows the monitoring of both sales staff and customers (who may say they have not been called, but in fact have).
- Targeting for training - By analysing the performance and conversation skills of the sales staff/dealerships the OEM can suggest appropriate training for individuals or for whole dealerships.
- Imposing standards - Using the rules system the OEM can instigate measures to 'name and shame' dealerships, or fine them for a late response to a lead, or use the 'traffic light' method of increasing the cost of replying to a lead over time.
- Exclusion - For example, the 'use-it-or-lose-it' rule can be used to re-assign a lead to another dealer after a given period of time.
- Compete - For example, the 'lock-out' rule can be used to encourage dealers to compete to be the first to contact a lead, or be prevented from doing so.

It will be clear to the skilled reader that a great variety of rules and criteria may be employed by way of the rules and tracking system. By way of example, these rules may include the following (some of which are described in more detail above):
- Enabling or disabling a dealer from using a particular tracking number. For example, a car dealer may be disabled from responding to a lead received from a car manufacturer by completing a call. Rules defining such permissions might, for example, be based on:
   - The number being dialled by the dealer.
   - The dealer's telephone number or numbers. The system can be set to block, play recorded messages in response to, and/or route calls to enquirers' numbers based on, amongst other criteria, the telephone number or numbers associated with the dealer.
   - The amount of elapsed time between the dealer receiving a lead and subsequently responding to it. The system may be prescribed to make allowances for intervening non-working days such as weekends and holidays.
   - The length of time any telephone response took. It might be regarded that a call length of a particular duration, say less than 15 seconds, cannot be regarded as a full response to an enquiry. The rules might prescribe a certain number of such attempts to extend the period before automatically blocking the dealer and reallocating the lead to another dealer.
   - The time of day or the day of the week that a lead is received, or that a lead is distributed to a dealer, or is responded to by a dealer. Such criteria may be used by the system in determining an appropriate routing of a communication.
- The charge for a response communication might be varied according to certain criteria including the delay in replying to a lead.
   - Call charging might be varied by cancelling a routing using one call rate number (e.g. BT Local Rate) and re-issuing the same routing using a higher rate number (e.g. BT National or Premium Rate), or perhaps a lower rate under some circumstances.
   - A 'Drop Charge' might be deployed, charging the caller a fixed fee in addition to a charge determined by the length of a call. The size of the fixed fee might be determined by the system in accordance with prescribed rules.
- 'Use it or lose it' rules, whereby the contact details for a lead are re-directed to an alternative dealer, possibly another dealer in the vicinity of the enquirer, and the original dealer is thereby blocked from making contact.
   - The contact details for the lead will be re-directed to an alternative dealer after a predetermined period of time, such as for example: 1 hour, 1 day, or 1 week.
- 'Lock-out' rules, whereby a group of dealers are provided with a lead's contact details, and after the lead has been followed up for the first time by a dealer the contact details for that lead are blocked for all dealers except the dealer who followed up the lead; all other dealers in possession of the lead's contact details are thereby prevented from contacting the lead.
   - Alternatively, the contact details may be blocked from all remaining dealers after two, three, or more, dealers have followed up the lead, thereby providing the prospect with multiple choices of dealer.
- Voice activity detection means, for use in determining whether contact had been made between a dealer and the enquirer.
- The system may be programmed to automatically respond to an enquiry, by way of appropriate media, including email and letter, according to rules determined in accordance with set criteria, such as the delay in response by a dealer or a series of dealers.
- The system can be employed to lawfully record conversations, which may be used (by way of automated or personal evaluation) to determine future call routing according to, for example, the quality of a response by a dealer.

The reader will appreciate that the present invention revolves around the concept of tracking individual customers (or prospective customers), rather than simply monitoring based on the product or service in question. Each such prospect is allocated a prospect identifier (e.g. by a controlling party), being a code (such as a telephone number or email address) which serves to uniquely identify the prospect likely to make the purchase; in order to conceal the "actual contact details", the prospect identifier may be different from the prospect's actual contact details (eg telephone number and email address). However, this prospect identifier is controllable and trackable by the controlling party, and does not enable direct communication with the prospect, but only via the controlling party. Preferably, the prospect identifier comprises or is associated with auxiliary data that relates to a probability of purchase by that prospect.

In addition, and as discussed above, it will be clear to the skilled reader that the solution provided by the present invention has application in a wide variety of different industries. It has particular application for any organisation that needs to be aware of what happens to a sales enquiry, particularly in situations where the original inbound enquiry may be forwarded from the recipient to another department or company for follow-up.

In such situations, it is traditionally much more difficult to control or audit how the enquiry is then handled. In addition, it has application for any organisation that requires to monitor efficiency and effectiveness in following up on aftersales enquiries, service actions or customer complaints.

By way of example, organisations typically might centrally collect enquiries for distributed follow-up, and to whom the present invention may be applicable, include:
- Car companies (as discussed by way of example above) or IT suppliers and their dealer networks;
- Estate agent brands and their chain of local agents;
- Finance lenders or insurance sellers relying in particular on brokers and resellers;
- Travel and holiday sales companies.

Although preferred embodiments of the present invention are described above, many changes, modifications and substitutions may be made by one of ordinary skill in the art without departing from the spirit and scope of the invention.

## Claims

1. A method for enabling monitoring of telecommunications activity associated with a particular first party, comprising the steps of:
receiving a communication from said first party, the communication including contact information for said first party;
in response, allocating a unique and trackable prospect identifier to said first party, the prospect identifier being associated with the contact information for said first
party,
wherein, subsequent use of the prospect identifier by a second party enables contact with said first party by said second party, and enables tracking and/or monitoring of said use by a third party.

2. The method of claim 1, including the steps of:
receiving a communication from a second party;
using a prospect identifier lookup table to identify one of a plurality of first parties for the communication based on the prospect identifier; and
routing the communication to the identified first party.

3. The method of claim 1 or 2, including the step of:
monitoring, by said third party, said telecommunications activity by means of a rules and tracking system, and said rules and tracking system preferably undertakes one,
some or all of the following tasks:
reporting; automated data entry; benchmarking; call recording; targeting for training; imposing standards; exclusion; and encouraging competition.

4. The method of claim 3, wherein said rules and tracking system logs information relating to the communication received from said first party, which preferably includes the time of said first party-initiated communication.

5. The method of claim 3, or 4, including the step of penalising or rewarding a second party in accordance with the monitored telecommunications activity and rules stored in said rules and tracking system, said rules and tracking system preferably being an automated rules and tracking system and the penalising or rewarding step additionally being automated.

6. The method of claim 5, including the steps of measuring the time period or periods elapsed between the time of the communication and one or more uses of the prospect identifier by said second party, and invoking prescribed rules stored in said rules and tracking system in accordance with the measured time period or periods.

7. The method of claim 6, wherein the prescribed rules include the setting of telecommunication charge rates, or allocation of replacement phone numbers to set premium telecommunications charge rates, applicable for use of the prospect identifier by said second party to contact said first party in accordance with the measured time period or periods.

8. The method of claim 6 or 7, wherein the prescribed rules include the cancellation or suspension of the prospect identifier after expiry of a pre-defined time period following the logged time of the communication if no use has been made of the prospect identifier by said second party, and wherein preferably, on expiry of said pre-defined time period, a new unique and trackable prospect identifier is allocated to said first party.

9. The method of claim 8, wherein said new prospect identifier is provided to a further party, such as a substitute party for said second party.

10. The method of any of the preceding claims, including the step of communicating said prospect identifier to said second party.

11. The method of any of the preceding claims, wherein a or said third party allocates and communicates said prospect identifier.

12. The method of claim 10 or 11, wherein said prospect identifier is communicated to a plurality of second parties, and the prospect identifier is blocked from further use after one of the said plurality of second parties has used said prospect identifier, preferably the second party who uses the prospect identifier not being blocked from further use.

13. The method of claim 12, wherein said prospect identifier is blocked from further use after a predetermined number of second parties has used the prospect identifier, preferably the second parties who have used the prospect identifier not being blocked from further use, preferably the pre-defined number of second parties being two, three, or more.

14. The method of claim 3 or any of claims 4 to 13 as dependent on claim 3, including the step of generating, by said rules and tracking system, one or more reports for said third party, based on the use by said second party of the prospect identifier.

15. The method of claim 14, including the step of allocating second party incentive rewards based on said report.

16. The method of claim 15, wherein the incentive rewards are calculated based on predetermined performance standards, preferably said performance standards being response time or another such factor monitored by said rules and tracking system.

17. The method of any of the preceding claims wherein a or said third party automatically brings said second party into contact with said first party, preferably without disconnecting the line to said second party.

18. A system for enabling monitoring of telecommunications activity associated with a particular first party, the system comprising:
a receiving unit for receiving a communication from said first party, the communication including contact information for said first party;
a prospect identifier allocation unit for allocating, in response to receipt of a communication by said receiving unit, a unique and trackable prospect identifier to said first party, the prospect identifier associated with the contact information for said first party; and
a tracking unit for tracking use of the prospect identifier by a second party to contact said first party.

19. The system of claim 18, including a memory unit for associating the prospect identifier with said contact information for said first party.

20. The system of claim 18 or 19, including a further receiving unit for a communication from said second party destined for said first party.

21. The system of claim 20, including a lookup table for comparing said prospect identifier with said first parties and determining a match, and wherein preferably said second party is connected to said first party in dependence on the said match.

22. A system having means for allocating a plurality of unique and trackable prospect identifiers to a plurality of first parties, in response to communications received from said plurality of first parties, each of which communications includes contact information for the respective first party, and means for storing and retrieving a correspondence of the unique and trackable prospect identifiers to the contact information.

23. The system of claim 22, including or in combination with means for monitoring use of the prospect identifiers by one or more second parties to contact respective first parties.

24. A method for enabling monitoring of telecommunications activity associated with a particular first party, comprising the steps of:
receiving a communication from said first party, the communication including contact information for said first party;
allocating a unique and trackable contact identifier to said first party, the contact identifier being associated with the contact information for said first party;
associating the unique and trackable contact identifier with a selected second party;
storing said unique and trackable contact identifier together with said contact information in a contact identifier lookup table;
providing the unique and trackable contact identifier to a selected second party;
receiving a communication from a second party using the contact identifier to attempt to contact said first party;
using a contact identifier lookup table to identify one of a plurality of first parties for the communication based on the contact identifier;
using stored rules to selectively route the communication to the identified first party.

25. A system for enabling monitoring of telecommunications activity associated with a particular first party, comprising:
first receiving means for receiving a communication from said first party, the communication including contact information for said first party;
allocation means for allocating a unique and trackable contact identifier to said first party, the contact identifier being associated with the contact information for said first party;
association means for associating the unique and trackable contact identifier with a selected second party;
storage means for storing said unique and trackable contact identifier, together with said contact information, in a contact identifier lookup table;
providing means for providing the unique and trackable contact identifier to a selected second party;
second receiving means for receiving a communication from a second party using the contact identifier to attempt to contact said first party;
routing means for selectively routing the communication received from the second party to the identified first party based on identification of the first party from the contact identifier lookup table.

26. A method according to any of claims 1 to 17 wherein said third party monitors said use in real time, preferably on a display unit or computer screen.

27. A method according to any of claims 1 to 17, wherein the unique and trackable prospect identifier is of itself an address of said first party, such for example a telephone number or email address by which said first party can be contacted, preferably directly.

28. A method according to claim 27, wherein said address is a virtual address which maps on to the originally supplied address of the first party.

29. A method according to any of claims 1 to 17, wherein said second party sends a communication to said first party via a or said third party, such as a call centre, which routes the communication to said first party.

30. A method according to claim 29, wherein said communication sent by said second party includes a unique identifier of said second party, and wherein preferably a further unique identifier is sent that identifies an individual member of said second party.

31. A computer program product comprising program code, which when executed carries out the method of any of claims 1 to 17.
